# EUROPEAN PATENT SPECIFICATION

(11) **EP 2 439 877 B1**
(45) Date of publication and mention of the grant of the patent: **16.05.2018**
(21) Application number: 09845426.7
(22) Date of filing: 15.09.2009
(51) Int. Cl.: H04L 12/24, H04W 24/00

(54) **METHOD AND DEVICE FOR ANALYZING ALARM CORRELATION, SYSTEM AND METHOD FOR CHECKING ALARM CORRELATION ANALYZING DEVICE**
VERFAHREN UND VORRICHTUNG ZUR ALARMKORRELATIONSANALYSE, SYSTEM UND VERFAHREN ZUR ÜBERPRÜFUNG EINER VORRICHTUNG ZUR ALARMKORRELATIONSANALSE
PROCÉDÉ ET DISPOSITIF D'ANALYSE DE CORRÉLATION D'ALARMES, SYSTÈME ET PROCÉDÉ DE VÉRIFICATION D'UN DISPOSITIF D'ANALYSE DE CORRÉLATION D'ALARMES

(30) Priority: 05.06.2009 CN 200910086486; 29.06.2009 CN 200910151504
(43) Date of publication of application: 11.04.2012
(73) Proprietor: ZTE Corporation, Shenzhen, Guangdong 518057 (CN)
(72) Inventor: LIU, Jinyang, Guangdong 518057 (CN)
(74) Representative: Novagraaf Technologies
(86) International application number: PCT/CN2009/073941
(87) International publication number: WO 2010/139146

(56) References cited:
- EP-A1- 1 460 801
- EP-A1- 1 785 866
- WO-A2-01/77828
- CN-A- 101 296 122
- CN-A- 101 355 451
- US-B1- 6 481 005
- US-B1- 6 707 795

## Description

### Field of the Invention

The present invention relates to computer and communication field, and in particular to a method and an apparatus for analyzing correlation of alarms and a system and methods for checking the apparatus for analyzing correlation of alarms.

### Background of the Invention

The increasing expansion of the scale of the Internet and the higher and higher requirements on network transmission promote the continue development of communication technologies. In the network of a communication system, when a physical device or a software module is failed, an event report for transmitting fault information is produced, and such an event report is referred to as an alarm. Since the network of the communication system comprises a plurality of interconnected devices, during the actual operation of the network, the fault of a component will lead to a great number of alarms in the network, which is the called alarm storm. In order to locate and process a fault in the great number of alarms, maintainers need to check all the alarms one by one in combination with a service configuration; and thus, the speed for locating and processing the fault is low, and the accuracy and the reliability for locating and processing the fault are also low due to the over-reliance on the knowledge and experience of the maintainers.

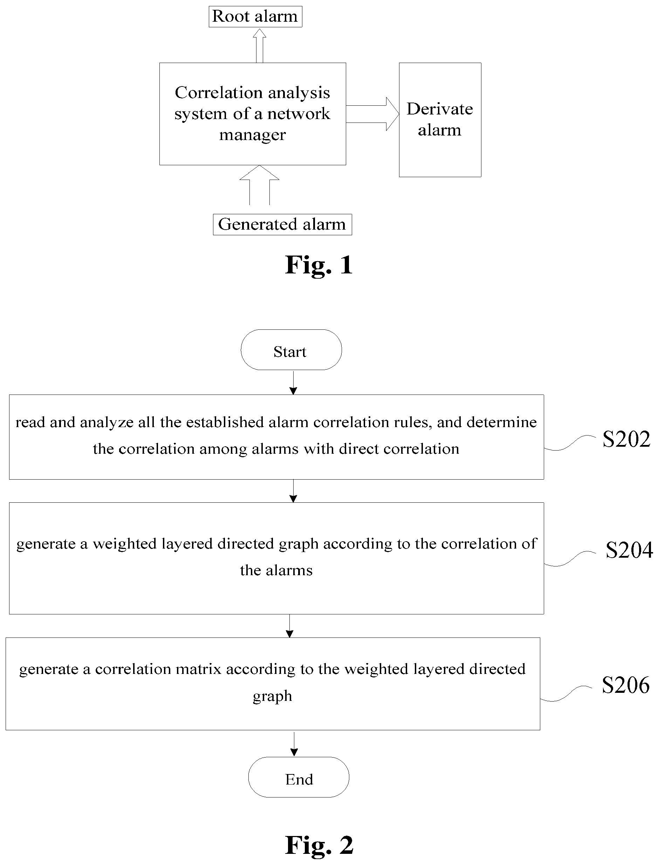

Aiming at the current situation of alarm analysis, it is urgently needed to enable a network management system to analyze correlation of alarms intelligently. The reasons for the generating an alarm and the location of the alarm can be found according to the location and the type of the alarm, so as to filter alarm information effectively, reduce reports of redundant information, optimize alarm management functions of a network management, and help the user analyze and locate a network fault quickly. However, a determination is made mainly based on correlation rules among alarms during a process for analyzing the correlation of the alarms. Generally, each device manufacturer artificially predefines some correlation rules according to internal rules for generating alarms of a device and engineering experience; redundant alarms are filtered according to the correlation rules; the correlation among the alarms are analyzed; and a root alarm and the derivate alarms thereof can be distinguished, so as to help the user analyze and locate the network fault fast, which is as shown in Fig. 1. Root alarm, as the name implies, means a source which generates alarms in a network, that is, the generation of the root alarm causes the generation of a series of alarms; and the derivate alarms means the series of alarms which are caused by the root alarm and are generated and disappeared with the root alarm. For instance, an alarm A generates an alarm B, and the alarm B further generates an alarm C. In this case, the alarm A is the root alarm of the alarms B and C, and alarms B and C are derivate alarms of the alarm A.

The correlation rules of the correlation of the alarms are the key for the analyzing the correlation during the correlation analysis of the apparatus for analyzing the correlation of the alarm. In the alarm storm, the key for analyzing the correlation is how to quickly and accurately query the correlation rules of the correlation of the alarms to locate the root alarm. At present, the majority of artificially-defined correlation rules are stored one by one, which has the following problems:
1) an unclear recursive relationship: the correlation rules among alarms are artificially predetermined according to the internal rules for generating alarms in the device and the engineering experience; since there are many kinds of device alarms, rules for generating the alarms are complicated, and the number of the correlation rules is great, only relative direct correlations can be artificially determined, while the recursive relationship is determined by a correlation analysis module;
2) no presentation of priority: it is assumed that both an alarm E and an alarm F can generate an alarm D, and according to rules for generating alarms in a device and maintenance experience, the alarm D is caused by the alarm E at a higher probability than by the alarm F, that is to say, when the alarms E, F and D exist at the same time, the priority of the alarm E being the root alarm is higher; and however, a one-by-one storage rule cannot present such a priority; and
3) a low analysis speed: a great number of alarms occur instantaneously during the alarm storm, querying the correlation rules one-by-one for each alarm and analyzing the priority and the recursion is time-consuming; it is assumed that the number of the alarms is N and the number of the correlation rules is M, consumed time is O(MN2), wherein O() is a complexity function; and O(MN2) denotes that the consumed time is directly proportional to MN2.

Therefore, there is a need for a solution to quickly and accurately determine correspondence between root alarms in a series of alarms and derivate alarms thereof so as to quickly and accurately locate a fault, so as to solve the problems in the related art.

Besides, since many device manufacturers have developed apparatus for analyzing the correlation of the alarms, how to check the application and the validity of the apparatus for analyzing the correlation of the alarms and determine whether the system meets all the predetermined correlation rules becomes another intractable problem for network operators.

Existing checking method, which checks the alarms by constructing corresponding alarm of each rule in the device one by one, has the following disadvantages:
a device limitation: in existing network environment, each site carries a large number of services; since all the alarms involved in the rules are related to the services and are the alarms with high severity level, it is difficult to construct the alarms involved in the rule on a device without causing affect the services; and besides, in order to construct the alarms on a real device, an operation maintainer needs to master the internal rules for generating alarms in the devices of different manufacturers, which is undoubtedly a challenge for the operation maintainer;
a low validation speed: all the rules are traversed, and the alarms corresponding to each rule is generated in an environment constructed on a real device, which consume long time, and lead to an extremely low checking speed;
   1) it being impossible to check the recursive relationship: the rules are artificially predetermined by each device manufacturer according to the internal rules for generating alarms in the device and the engineering experience, since there are many kinds of device alarms, the rules for generating the alarms are complicated, and the number of the rules is great, only the direct correlation can be artificially determined; and therefore, the recursive relationship cannot be checked when checking the rules one-by-one; and
   2) incomplete priority checking: it is assumed that both the alarm E and the alarm F can generate the alarm D, and according to rules for generating alarms in a device and maintenance experience, the alarm D is caused by the alarm E at a higher probability than by the alarm F, that is to say, when the alarms E, F and D exist at the same time, the priority of the alarm E being the root alarm is higher; however, a one-by-one storage rule cannot present the priority; and even the alarms D, E and F are constructed for checking in one step, only the priorities of the alarms E and F can be checked, so the checking cannot be performed completely if there is a recursion priority.

Therefore, there is a need for a solution to a check whether an apparatus for analyzing the correlation of the alarms meet all correlation rules predetermined by it self, so as to solve the problems in the related art. EP 1785866, EP 1460801, WO0177828 and US 6707795 provide respective technical solutions; however, the above mentioned problem still remains unsolved.

### Summary of the Invention

The present invention provides a method and an apparatus for analyzing correlation of alarms which can analyze the correlation of the alarms rapidly and effectively, and a system for checking whether the apparatus for analyzing the correlation of the alarms manufactured by each device manufacturer meets all the correlation rules predetermined by the device manufacturer, so as to overcome the defects such as the device limitation caused by the traditional checking mode.

In accordance with an aspect of the present invention, a method for determining a correlation matrix of alarms is provided according to claim 1.

The dependent claims set out particular embodiments of the invention.

In accordance with another aspect of the present invention, an apparatus for determining a correlation matrix of alarms according to claim 6 is provided.

Preferably, the weighted layered directed graph generation unit generating the weighted layered directed graph of the alarms weighted layered directed graph according to the correlation of the alarms comprises: placing a derivate alarm in a layer below the direct root alarms corresponding thereto, and indicating the correspondence between a direct root alarm and the derivate alarm by a unidirectional arrow, wherein if the derivate alarm corresponds to at least two direct root alarms, unidirectional arrows between the at least two direct root alarms and the derivate alarm are arranged clockwise from left to right according to a priority order, and weights corresponding to priorities of the unidirectional arrows are marked on the unidirectional arrows.

Preferably, when an alarm has at least two layers in the weighted layered directed graph, the alarm is located in a lowest layer of the at least two layers in the weighted layered directed graph.

Preferably, the correlation matrix generation unit generating the correlation matrix of the alarms according to the weighted layered directed graph comprises: searching the weighted layered directed graph from top to down and, for each layer, from left to right; orderly taking all alarms searched out as matrix elements in the first column of the correlation matrix; for each matrix element alarm in the first column, searching, according to in-degree thereof, from left to right in a clockwise direction in the weighted layered directed graph, for parent alarm nodes of the matrix element alarm; and in the searched out parent alarm nodes, taking a parent alarm node in a highest layer and with a smallest weight as a matrix element in the second column of the matrix element alarm, and a parent alarm node in a second highest layer and with a second smallest weight as a matrix element in the third column of the matrix element alarm, and repeating the process until a parent alarm node in a lowest layer and with a highest weight is searched.

In the method, in the correlation rule data matrix, the first column comprises all the alarms in the alarm correlation rule table, and all the root alarms corresponding to the alarms in the first column are listed in the columns from the second column to the last valued column in each row; the second column comprises recursive root alarms with a first priority, the third column comprises recursive root alarms with a second priority, and the rest columns can be deduced in the same manner; from the second column to the last valued column, the respective column values in each column are identical; and a set of column values in the first columns of respective rows where the identical values are located is a set of all derivate alarms of an alarm corresponding to the identical values in the column.

Preferably, the step of analyzing the output result of the apparatus for analyzing the correlation of the alarms comprises: checking whether the root alarm of the alarm is a value in the second column corresponding to the alarm in the correlation rule matrix, or checking whether the derivate alarms of an alarm corresponding to a value in the second column comprise the set of the alarms corresponding to the values in the first column that is corresponding to the values in the second column, if it is determined to be yes, determining that the alarm corresponding to the values in the second column is the root alarm of the alarm; clearing the alarm of the second column to make the alarm be a history alarm; checking whether the root alarm of the alarm is a value in the third column corresponding to the alarm in the correlation rule matrix, or checking whether the derivate alarms of the alarm of the values in the third column comprise the set of the alarms corresponding to the values in the first column that is corresponding to the value of the third column, if it is determined to be yes, determining that the alarm corresponding to the values in the third column is the root alarm of the alarm; clearing the alarm of the third column to make the alarm be a history alarm; and repeating the above process until all the alarms corresponding to values of valued columns are cleared.

Preferably, the alarm is a root alarm if there is no value in the second column.

In the present invention, the correlation matrix of the alarms is determined by the apparatus for analyzing the correlation of the alarms first, the root alarms and the derivate alarms thereof in the series of generated alarms are determined by the method and apparatus for analyzing the correlation, and so that the determination of the root alarms and the derivate alarms thereof from the series of generated alarms is facilitated. Moreover, by emulating the network element and constructing the alarms to check whether the apparatus for analyzing the correlation of the alarms manufactured by each device manufacturer conforms to all the correlation rules predetermined by the device manufacturer, the present invention overcomes the limitation in real devices caused by the conventional checking mode, improves the checking speed and makes the recursion relationships and priorities of the alarms to be checked thoroughly.

In accordance with another aspect of the present invention, a system for checking an apparatus for analyzing correlation of alarms is provided according to claim 15.

Other features and advantages of the present invention will be described in the following description and partly become obvious from the description, or be understood by implementing the present invention. The objects and other advantages of the present invention can be realized and obtained through the structures indicated by the description, claims and drawings.

### Brief Description of Drawings

Drawings, provided for further understanding of the present invention and forming a part of the specification, are used to explain the present invention together with embodiments of the present invention rather than to limit the present invention, wherein:
Fig. 1 is a schematic diagram of an apparatus for analyzing the alarm correlation in the conventional art;
Fig. 2 is a flowchart of a method for determining the correlation matrix of the alarms according to the embodiments of the present invention;
Fig. 3 is a schematic diagram of the structure of a weighted layered directed graph of alarms according to the embodiments of the present invention;
Fig. 4 is a schematic diagram of the structure of the matrix elements in the first column of the correlation matrix of the alarms according to the embodiments of the present invention;
Fig. 5 is a schematic diagram of the structure of the correlation matrix of the alarms according to the embodiments of the present invention;
Fig. 6 is a flowchart of a method for analyzing the alarm correlation according to the embodiments of the present invention;
Fig. 7 is a schematic diagram of the structure of an apparatus for determining the correlation matrix of the alarms according to the embodiments of the present invention;
Fig. 8 is a schematic diagram of the structure of an apparatus for analyzing the alarm correlation according to the embodiments of the present invention;
Fig. 9 is a block diagram of a checking system according to the embodiments of the present invention;
Fig. 10 is a flowchart of a checking method according to the embodiments of the present invention;
Fig. 11 is a flowchart of another checking method according to the embodiments of the present invention;
Fig. 12 is a schematic diagram of a correlation rule matrix with a cleared second column according to the embodiments of the present invention; and
Fig. 13 is a schematic diagram of a correlation rule matrix having a last column according to the embodiments of the present invention.

### Detailed Description of Embodiments

The embodiments of the present invention are described in detail hereinafter with reference to accompanying drawings.

Fig. 2 is a flowchart of a method for determining a correlation matrix of alarms in the present invention. As shown in Fig. 2, the method for determining the correlation matrix of the alarms comprises the following steps S202 to S206.

Step S202: read and analyze all the alarm correlation rules established to determine the correlation among directly-correlated alarms.
the artificially predetermined correlation rules of each alarm is tabulated, wherein the table has a left column and a right column, which respectively represent derivate alarms and possible root alarms thereof. Each of the two columns comprises two columns: source points of the alarms and alarm types. One derivate alarm may have many root alarms. The sequence of all the possible root alarms in the table denotes the priorities of the possible root alarms triggering the derivate alarms, and a root alarm at a more frontal location in the table has a higher priority. Additionally, this table only describes alarms with direct relationships, as shown in Table 1.

**Table 1**

| Derivate alarm | | Root alarm | |
|---|---|---|---|
| Source point | Alarm type | Source point | Alarm type |
| STM-N optical interface | LOS | Single board (OA board) | Dislocation of the single board |
| | | STM-N optical interface | No installation of an optical module |
| MS | AIS | STM-N optical interface | LOS |
| MS | RDI | STM-N optical interface | LOS |
| | | MS | AIS |
| AU4 | AIS | STM-N optical interface | LOS |
| | | MS | AIS |
| | | AU4 | LOP |

The correlation of the alarms involved in the present invention is described by taking an optical network as an example. As shown in Table 1, A represents an alarm for the dislocation of a single board (OA board); B represents an alarm for an unauthenticated optical module of a synchronous transmission module level N (STM-N) optical interface; C represents an alarm for the loss of pointer (LOP) in an administrative unit (AU) 4; D represents an alarm for the loss of signal (LOS) of the STM-N optical interface; E represents an alarm for a multiplex section-remote defect indication (MS-RDI); F represents a multiplex section alarm indication signal (MS-AIS); and G represents an AU 4 alarm indication signal (AU4-AIS). A correlation table, in which the alarms are represented with letters, is shown in Table 2.

**Table 2**

| Derivate alarm | Root alarm |
|---|---|
| D | A |
| | B |
| F | D |
| E | D |
| | F |
| G | D |
| | F |
| | c |

The correlation of the alarms shown in Table 2 is that: both A and B can trigger D, wherein the priority of A is higher than that of B; D can trigger F; both D and F can trigger E, wherein the priority of D is higher than that of F; and anyone of D, F, and C can trigger G, wherein the sequence of priorities of D, F and C is D>F>C.

Step S204: generate a weighted layered directed graph according to the correlation of the alarms. The principle of generating the weighted layered directed graph is: placing derivate alarms in a layer below the direct root alarms corresponding thereto, and indicating the correspondence between the direct root alarms and the derivate alarms thereof by unidirectional arrows, wherein if a derivate alarm corresponds to at least two direct root alarms, the unidirectional arrows between the at least two direct root alarms and the derivate alarm are arranged clockwise from left to right according to a priority order, and weights corresponding to the priorities of the unidirectional arrow are marked on the unidirectional arrows. When an alarm can be located in at least two layers in the weighted layered directed graph, the alarm will be located in the lowest layer of the at least two layers in the weighted layered directed graph.

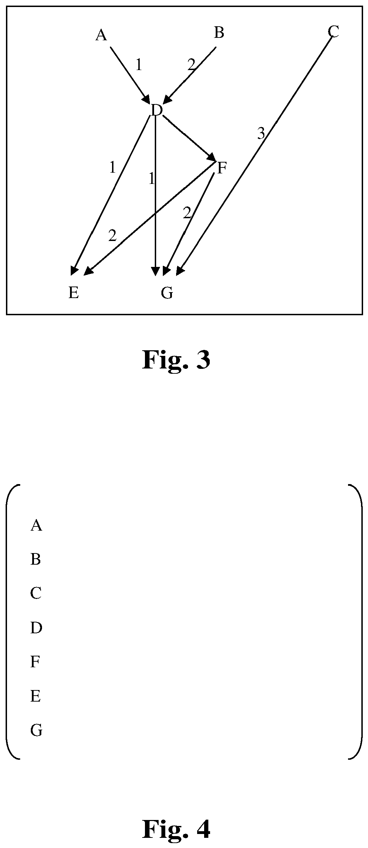

Fig. 3 is a schematic diagram of the structure of a weighted layered directed graph of alarms in the present invention. As shown in Fig. 3, A and B are root alarms, neither of which is a derivate alarm of any alarm. Both A and B are located on the top layer of the weighted layered directed graph, and can trigger the derivate alarm D, wherein the priority of A is higher than that of B; therefore, D is taken as a child node of A and B, and both A and B point to D. Since the priority of A is higher than that of B, A is placed on the left of B, and the weight on the arrow A→D is marked to be 1, while the weight on the arrow B→D is marked to be 2.

Since D can trigger F, F is placed in a layer below D; and F has only one root alarm, and therefore, the weight of F is 0, wherein the weight '0' is not marked. Both D and F can trigger E, and the priority of D is higher than that of F. It can be seen from the figure that both D and F can trigger E, and D and F are located in different layers. That is to say, E can be deemed to be in the same layer with F or in a layer below F; and in this case, according to the above principle, E should be located in the lowest layer of the two layers, i.e., a layer below F. Additionally, since the priority of D is higher than that of F, F is drawn on the right side of D in a clockwise direction and marked with a corresponding weight. D, F and C all can trigger G, and the sequence of priorities of D, F and C is D>F>C. Besides, since D can trigger F, G is placed in a layer below F; since no alarm can trigger C, that is, C is a root alarm which is not a derivate alarm of any alarm; C is placed at the right side of the top layer. At the same time, three directed arrows are correspondingly marked with weights: 1, 2 and 3.

Apparently, although a weighted layered directed graph of the alarms is exemplarily illustrated herein, other weighted layered directed graphs can be generated according to the aforementioned principle because the relationship among all the alarms is similar.

Step S206: generate a correlation matrix according to the weighted layered directed graph.

First, the weighted layered directed graph is searched from top to down and, for each layer, from left to right for parent alarm nodes; and the searched out alarm nodes are orderly taken as elements in the first column of the matrix. Taking the weighted layered directed graph shown in Fig. 3 as an example, and as shown in Fig. 4, the search result in the first column of the correlation matrix are ABCDFEG.

Then, for each matrix element alarm in the first column of the correlation matrix, according to in-degree thereof, parent alarm nodes are searched for, from left to right in a clockwise direction; a parent alarm node in a highest layer and with a smallest weight is taken as a matrix element alarm in the second column of the alarm matrix element, i.e., a recursive root alarm with a first priority; a parent alarm node in a second highest layer and with a second smallest weight is taken as a matrix element in the third column of the alarm matrix element; and similar search process is performed continuously until the rightmost parent alarm node in a bottom layer with a highest weight is searched. The root alarm that is repeatedly searched during a search process is skipped and a next search is performed. Each of the rows ABCDEFG are described in detail hereinafter.

For alarms A, B and C, since no parent alarm nodes can be searched out and therefore the root alarms of alarms A, B and C are null. The following detailed description is given by taking the alarm G as an example: the in-degree of G in the clockwise direction is D, F and C. Starting from D, A and B are searched out; since the layer of A is the highest and the weight thereof is the smallest, A is taken as a root alarm with the first priority; since B is on a same layer with A but has a higher weight than A, B is taken as a root alarm with the second priority; and since D is located on the lowest layer, D is taken as a root alarm with the third priority.

Then a search is performed starting from F to find A, B and D; and since A, B and D have already been searched out, A, B and D will be skipped, and only F is taken as a root alarm with the fourth priority.

At last, a search is performed starting from C and only C is found, and therefore C is taken as a root alarm with the fifth priority.

Thus, the root alarms of G are arranged, according to the priorities and recursion, as ABDFC.

It can be seen from the flow of the method for determining the correlation matrix of the alarms in the present invention that the recursive root alarms with the first priority, the recursive root alarms with the second priority and so on of each alarm generated in a network can be simply and clearly indicated; and the set of the derivate alarms of each alarm generated in the network can also be simply and clearly indicated while the priorities and the recursion of the root alarms are guaranteed in each level, and thus, the problems of the low analysis speed, the unclear recursive relation and the non-guaranteed priority caused by the conventional one-by-one rule storage are overcome.

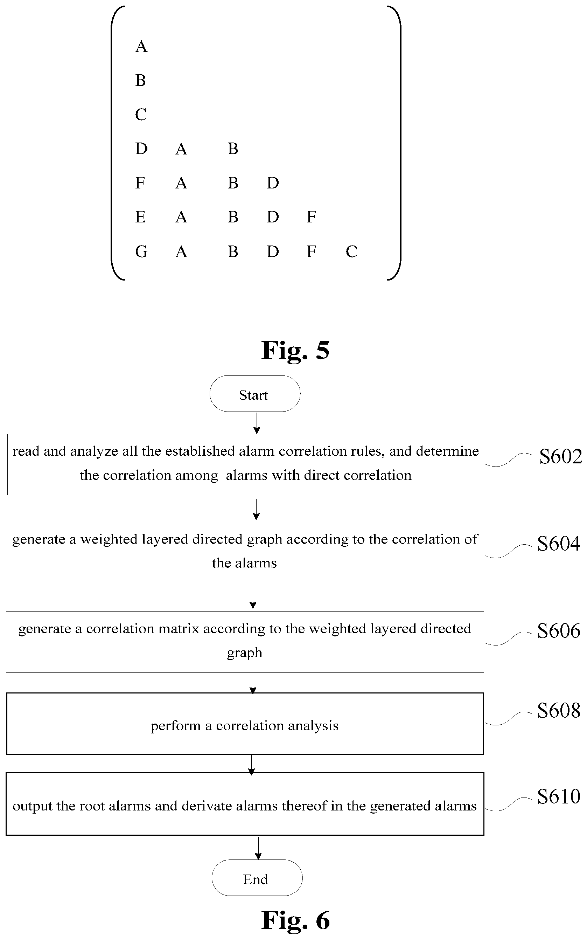

Fig. 5 shows the correlation matrix of the alarms corresponding to the weighted layered directed graph of the alarms shown in Fig. 3. It can be easily seen that the correlation matrix shown in Fig. 5 has the following characteristics.
1) All root alarms of an alarm are listed in the columns from the second column to the last valued column of a row, and the priority and the recursion of each root alarm are clearly guaranteed and reflected. The elements in the second column are the recursive root alarms with the first priority; the elements in the third column are the recursive root alarms with the second priority, and so on. In order to locate an ultimate root alarm of an alarm, the row where the alarm is located should be located first according to the first column, and then the primary alarm in the network found from the second column backwards is taken as the ultimate root alarm. If no alarm in the network is found after the last valued column is searched, the alarm itself is a root alarm and has no root alarm.
2) The values in each valued column (except for the first column) are identical, and the set in the first columns of rows where the identical values in a column are located is the set of all derivate alarms of an alarm corresponding to the identical values in the column. Taking the correlation matrix shown in Fig. 5 as an example, all the values in the second valued column are A, and the set in the first columns of the rows where A is located is DFEG, that is to say, the set of all the derivate alarms of A is DFEG. Thus, the derivate alarms of one alarm can be searched out by selecting alarms in the network from the set of all the derivate alarms thereof, which is simple and convenient.
3) The correlation rule matrix is a lower triangular matrix, and therefore half of storage space can be saved. The generation of the lower triangular matrix depends on the specific algorithms and methods for generating the weighted layered directed graph and the correlation matrix, thereby saving maximum space resources.

Fig. 6 is a flow chart of a method for analyzing the correlation of alarms in the present invention. As shown in Fig. 6, the method for analyzing the correlation of alarms comprises the following steps S602 to S610.

The method for analyzing the correlation of alarms in the present invention is constructed based on the method shown in Fig. 2, and therefore, steps S602-S606 are realized in the same way as steps S202-S206 and will not be described in detail herein.

Step S608: analyze correlation. Perform a correlation analysis on a series of alarms generated in a network according to the correlation matrix in combination with the specific network topology. The process of performing the analysis according to a correlation rule matrix is as follows: for each alarm generated in the network, first searching the correlation rule matrix for rows starting with the alarm, then searching all the generated alarms column by column starting from the second column, and a matched alarm(s) is (are) the root alarm(s) of the alarm; and in this way, the root alarm(s) of each alarm can be found (an alarm with no root alarm being found takes itself as a root alarm), and the time taken by this process is O(N²) at most.

Step S610: output the root alarms and derivate alarms thereof in the generated alarms. When a series of alarms are generated in the network, the root alarms are the core concern of a maintainer, and therefore, in the present invention, the root alarms are output automatically to help a maintainer locate and remove a fault. Meanwhile, in the present invention, all the derivate alarms resulting from a root alarm and the root alarms of each derivate alarm can be provided for view, which is convenient for users to use.

The method for analyzing the correlation of alarms in the present invention is significantly efficient in the alarm analysis, and can rapidly analyze the correlation of alarms to locate a root alarm especially in a case where a great number of alarms are generated in a short time.

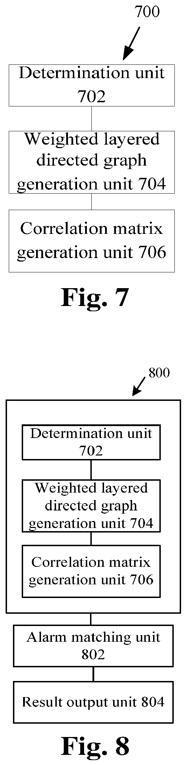

Fig. 7 is a schematic diagram of the structure of an apparatus for determining a correlation matrix of alarms in the present invention. As shown in Fig. 7, the apparatus for determining the correlation matrix of the alarms 700 in the present invention comprises a determination unit 702, a weighted layered directed graph generation unit 704 and a correlation matrix generation unit 706, wherein the determination unit 702 is configured to determine the correlation of the alarms, wherein the correlation at least comprises correspondence among a derivate alarm and all direct root alarms of the derivate alarm, and a priority relationship among the direct root alarms corresponding to a same derivate alarm; the weighted layered directed graph generation unit 704 is configured to generate a weighted layered directed graph of the alarms according to the correlation of the alarms, wherein the weighted layered directed graph generation unit 704 generating the weighted layered directed graph of the alarms weighted layered directed graph according to the correlation of the alarms comprises: placing a derivate alarm in a layer below direct root alarms corresponding thereto, and indicating the correspondence between a direct root alarm and a derivate alarm thereof by a unidirectional arrow, wherein if a derivate alarm corresponds to at least two direct root alarms, the unidirectional arrows between the at least two direct root alarms and the derivate alarm are arranged clockwise from left to right according to a priority order, and a weight corresponding to the priority of a unidirectional arrow is marked on the unidirectional arrow. When an alarm has at least two layers in the weighted layered directed graph, the alarm will be located in the lowest layer of the at least two layers in the weighted layered directed graph. The correlation matrix generation unit 706 generating the correlation matrix of the alarms according to the weighted layered directed graph comprises: searching the weighted layered directed graph from top to down and, for each layer, from left to right; orderly taking all alarms searched out as matrix elements in the first column of the correlation matrix; for each matrix element alarm in the first column, according to the in-degree thereof, searching for parent alarm nodes thereof, from left to right in a clockwise direction, and in the searched out parent alarm nodes of the matrix element alarms, taking a parent alarm node in a highest layer and with a smallest weight as a matrix element in the second column of the matrix element alarm, and a parent alarm node in a second highest layer and with a second smallest weight as a matrix element in the third column of the matrix element alarm; and repeating the process until the parent alarm node in a lowest layer and with a highest weight is searched out.

Fig. 8 is a schematic diagram of the structure of an apparatus for analyzing alarm correlation in the present invention. As shown in Fig. 8, the apparatus for analyzing alarm correlation 800 in the present invention is formed by adding an alarm matching unit 802 and a result output unit 804 on the basis of the apparatus shown in Fig. 7, wherein the alarm matching unit 802 is configured to match generated alarms with matrix element alarms in the rows of the correlation matrix, and the result output unit 804 is configured to output the root alarms and derivate alarms thereof in the generated alarms according to the match between the generated alarms and the matrix element alarms in the rows of the correlation matrix. For each alarm in the generated alarms, the alarm matching unit 802 searches the correlation rule matrix for rows starting with the alarm, and searches whether there is an matched alarm in the generated alarms from the second column, wherein if there is a matched alarm, the root alarm corresponding to the alarm is found.

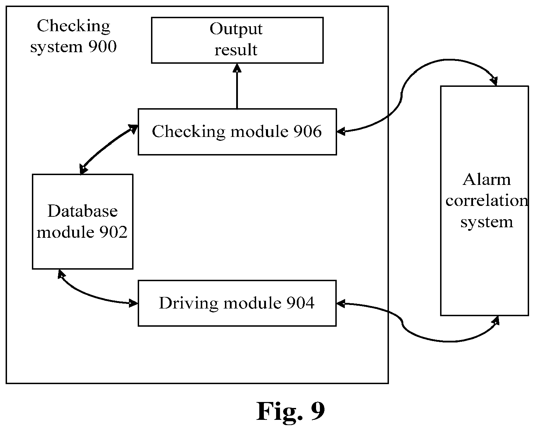

Fig. 9 is a diagram illustrating the modular structure of a checking system in the present invention. As shown in Fig. 9, the checking system 900 comprises three modules: a database module 902, a driving module 904 and a checking module 906, wherein the database module 902 stores an alarm correlation rule table; the driving module 904 emulates network elements and makes alarms in the alarm correlation rule table; and the checking module 906 analyzes results output by the apparatus for analyzing the alarm correlation to make a determination on whether all the rules are met, and outputs all items meeting the rules and not meeting the rules.

In this embodiment, the method for generating the alarm correlation rule table is the same as that described in Table 1 and Table 2 and is therefore not repeatedly described here.

The invention is described in detail hereinafter with reference to accompanying drawings in combination with specific embodiments.

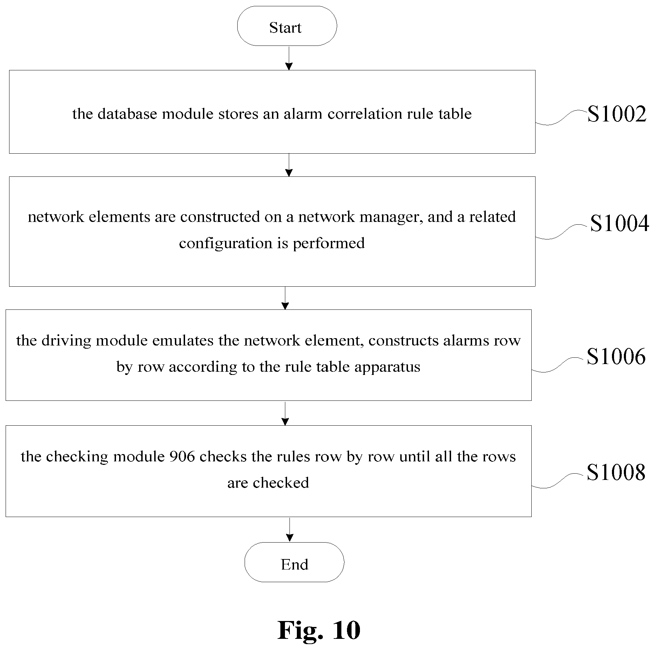

Fig. 10 is a flowchart of a checking method according to an embodiment of the present invention. Referring to Fig. 10, the checking method according to the embodiment comprises the following steps S1002 to S1008.

Step S1002: the database module 902 stores an alarm correlation rule table, which is as shown in Table 2.

Step S1004: network elements are constructed on a network manager, and related configurations are performed for them. Create network elements of various types and insert various cards for every network element on a network manager system. Topological connections between network elements are created, and various types of high-level and low-level services are configured to cover all the source points of alarms in the rule table.

Step S1006: the driving module 904 emulates network elements, constructs alarms row by row according to the rule table, and reports the alarms to an apparatus for analyzing the alarm correlation. In this embodiment, the first row of the alarm correlation rule table is described as an example; alarms A and D are constructed and reported to the apparatus for analyzing the alarm correlation.

Step S1008: the checking module 906 checks the rules row by row until all the rows are checked. Since the alarms A and D have been constructed in step S1006, the apparatus for analyzing the alarm correlation performs an alarm analysis automatically; and the checking module 906 checks whether only A is displayed on a current root alarm interface and whether the derivate alarms of A comprise D (or check whether only D is displayed on the current derivate alarm interface and whether A is the root alarm of D), and if not, records that the row fails to meet the rules.

Steps S1006 and S1008 are repeatedly carried out in the same manner until the alarms G and C in the last row are checked.

It can be seen from this embodiment that by constructing alarms in a correlation rule table row by row by emulating network elements and checking the constructed alarms, the limitation in real devices is broken, the time spent in the construction of an environment with real devices is significantly saved, and working efficiency is improved. However, this row-by-row checking method still has defects such as that the checking speed is not fast enough and the recursive relationships and priorities can not be checked thoroughly. These problems are overcome in another embodiment of the present invention.

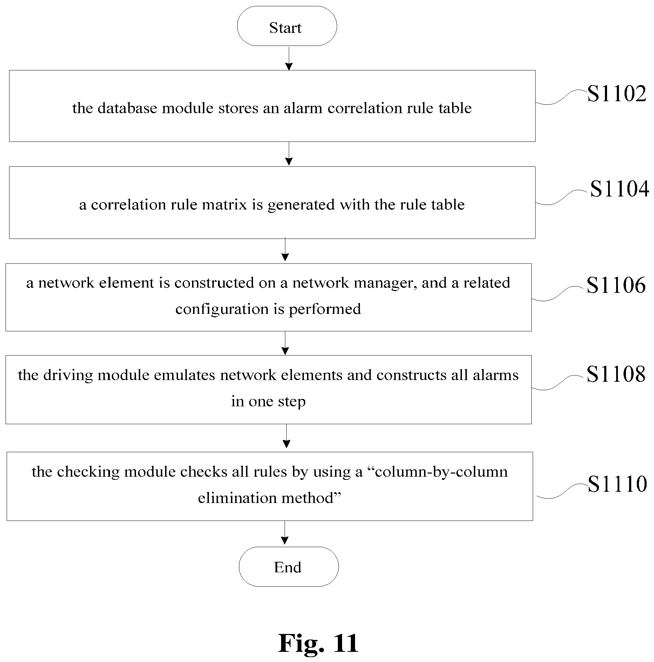

Fig. 11 is a flowchart of a checking method according to another embodiment of the present invention. Referring to Fig. 11, the checking method provided in this embodiment comprises the following steps S1102 to S1110:
Step S1102: the database module 902 stores a predetermined alarm correlation rule table which is as shown in Table 2;
Step S1104: a correlation rule matrix is generated for the correlation rule table and then stored.

In this step, the algorithm for generating the correlation rule matrix can be understood with reference to the method for determining the correlation rule matrix of the alarms which is described with reference to Fig. 2- Fig. 5 and Tables 1 and 2.

Step S1106: network elements are constructed on a network manager, and related configurations are performed for them. Create network elements of various types and insert various cards for every network element on a network manager system. Topological connections between network elements are created, and various types of high-level and low-level services are configured to cover all the source points of alarms in the rule table.

Step S1108: the driving module 904 emulates the network elements and constructs all alarms at a time. In this embodiment, all the constructed alarms ABCDEFG comprised in the first column of the alarm correlation rule table are reported to an apparatus for analyzing the alarm correlation. In addition, a large-message alarm constructed in this step can be stored, and it is directly loaded and sent to the network manager in the next use, which facilitates future uses.

Step S1110: the checking module 906 checks all rules using a "column-by-column elimination method".

In the step, the "column-by-column elimination method" will be described in detail hereinafter.

The step that the checking module 906 checks whether all the rules in the correlation rule matrix are met by using the "column-by-column elimination method" is that: since all the alarms in the rules are constructed by the driving module 904 in Step S1008 and the apparatus for analyzing the alarm correlation performs a correlation analysis automatically, the checking module 906 checks whether an analysis on the root alarms of each alarm is correct, that is to say, the checking module 906 checks whether the root alarms of each alarm are the values in the second column of the correlation rule matrix (or whether the derivate alarms of the alarms in the second column comprise the set of the alarms in the first column corresponding thereto), if the second column value is empty, then the alarms in the first column themselves are root alarms; then, the alarms in the second column are cleared and confirmed in the network manager to be changed to history alarms (an automatic refresh is performed on the current alarm interface when the current alarm becomes a history alarm), all the rest current alarms are re-analyzed to determine whether the root alarms of the rest alarms are the values in the third column (or whether the derivate alarms of the alarms in the third column comprise the set of the alarms in the first column corresponding thereto) of the correlation rule matrix; and the similar analysis is performed until the alarms in all the columns are eliminated. During the checking process, the checking module 906 records all the rules that are met as well as the rules that are not met.

The specific checking process is illustrated in detail hereinafter with reference to an embodiment.

First, in the case that all alarms A, B, C, D, E, F and G exist, the checking module 906 checks whether only alarms A, B and C are displayed on the current root alarm interface, whether the derivate alarms of A comprise alarms D, E, F and G, whether the derivate alarms of both B and C are empty (or whether only alarms D, E, F and G are displayed on the current derivate alarm interface, and whether the root alarms thereof are A), and records the rules that are not met. This process is used to check whether an analysis for checking the respective recursive alarms of an alarm with the first priority is correct.

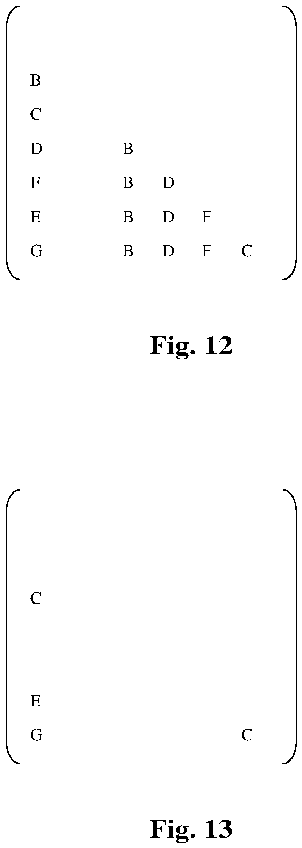

Then, the checking module 906 performs an elimination confirming operation for alarm A, and changes the alarm A to be a history alarm. Due to the use of emulated network elements, the elimination of the alarm A will not make other alarms eliminated, so the set of the current existing alarms is BCDFEG, as shown in Fig. 12. These alarms are selected to be reanalyzed; it is checked whether only alarms B and C are displayed on the refreshed current root alarm interface, whether the derivate alarms of the alarm B comprise D, E, F and G, and whether the derivate alarms of C are empty (or whether only alarms D, F, E and G are displayed on the current derivate alarm window, and whether the derivate alarms thereof are alarm B), and records the rules that are not met. This process is used to check whether an analysis for checking the recursive alarms of an alarm with the second priority is correct.

Then, the checking module 906 eliminates alarms B, D and F orderly; and the checking process is the same as that described above and is therefore not described repeatedly. After the elimination of alarms A, B, D and F, only alarms C, E and G exist in the network manager, as shown in Fig. 13. These three alarms C, E and G, are selected to be reanalyzed, so as to check whether only alarms C and E are displayed on the current root alarm interface, whether the derivate alarm of the alarm C is G, and whether the derivate alarms of the derivate alarm E are empty (or whether only alarm G is displayed on the current derivate alarm window, with the derivate alarm thereof being alarm C), and records the rules that are not met. This process is used to check whether an analysis for checking the recursive alarms of an alarm with the last priority is correct.

Then, alarm C is performed an elimination confirming operation and is changed to be a history alarm. The set of the current existing alarms is EG, the alarms E and G are selected to be reanalyzed. It is checked whether only alarms E and G are displayed on the current refreshed root alarm interface and the derivate alarms of the alarms E and G are empty (or whether the current derivate alarm is empty). This process is used to check whether the analysis that there is no derivate alarm for an alarm is correct. The process above is repeatedly performed until all the columns from the second column to last column in the correlation rule matrix are checked. During the process, the checking module 906 automatically records the rules that are met as well as the rules that are not met.

It can be seen from this embodiment that by emulating network elements, constructing all alarms at a time and checking a correlation rule matrix by using the "column-by-column elimination method", the limitation existing in real devices is broken, priorities and recursion are checked thoroughly, rapidly and conveniently, and all the major defects existing in the conventional checking methods are overcome.

It should be understood by those skilled in the art that the apparatus shown in Fig. 7 and Fig. 8 are designed to realize the methods shown in Fig. 2 and Fig. 6, and the functions of each processing unit and each processing module in the apparatus shown in Fig. 7 and Fig. 8 can be realized by the related description in the methods shown in Fig. 2 and Fig. 6, and the functions of each processing unit and each processing module can be realized by programs running in a processor or corresponding logic circuits.

## Claims

1. A method for determining a correlation matrix of alarms, comprising:
determining correlation of the alarms, wherein the correlation at least comprises correspondence between derivate alarms and direct root alarms thereof, and a priority order among the direct root alarms corresponding to a same derivate alarm;
generating (S604) a weighted layered directed graph of the alarms according to the correlation of the alarms, and generating (S606) the correlation matrix of the alarms according to the weighted layered directed graph;
for each alarm generated in a network, searching the correlation matrix for a row starting with the alarm; and searching all alarms starting from second column of the row to find whether there is a matched alarm; if there is a matched alarm, a root alarm corresponding to the alarm is found;
wherein the step of generating a weighted layered directed graph of alarms according to the correlation of the alarms comprises:
placing a derivate alarm in a layer below the direct root alarms corresponding thereto, and indicating the correspondence between a direct root alarm and the derivate alarm by a unidirectional arrow, wherein if the derivate alarm corresponds to at least two direct root alarms, unidirectional arrows between the at least two direct root alarms and the derivate alarm are arranged clockwise from left to right according to the priority order, and weights corresponding to priorities of the unidirectional arrows are marked on the unidirectional arrows;
the step of generating the correlation matrix of the alarms according to the weighted layered directed graph comprises: searching the weighted layered directed graph from top to down and, for each layer, from left to right; orderly taking all alarms searched out as matrix elements in the first column of the correlation matrix; for each matrix element alarm in the first column, searching, according to in-degree thereof, from left to right in a clockwise direction, for parent alarm nodes of the matrix element alarm; and in the searched out patent nodes, taking a parent alarm node in a highest layer and with a smallest weight as a matrix element in the second column of the matrix element alarm, and a parent alarm node in a second highest layer and with a second smallest weight as a matrix element in the third column of the matrix element alarm, and repeating the process until a parent alarm node in a lowest layer and with a highest weight is searched.

2. The method according to Claim 1, **characterized in that** the correlation further comprises source points of the alarms and reasons for generating the alarms.

3. The method according to Claim 1, **characterized in that** when an alarm has at least two layers in the weighted layered directed graph, the alarm is located in the lowest layer of the at least two layers in the weighted layered directed graph.

4. The method according to Claim 1, **characterized in that** the method further comprises:
outputting (S610) the root alarms and the derivate alarm thereof in generated alarms according to matched cases between the generated alarms and matrix element alarms in the rows of the correlation matrix;
wherein a step of matching the generated alarms and the matrix element alarms in the rows of the correlation matrix comprises:
for each alarm in the generated alarms, searching a correlation rule matrix for rows starting with the alarm, and searching all the generated alarms starting from the second column to find whether there is a matched alarm, wherein if there is a matched alarm, a root alarm corresponding to the alarm is found;
wherein the correlation matrix of the alarms are generated according to the weighted layered directed graph by the following method:
searching the weighted layered directed graph from top to down and, for each layer, from left to right; orderly taking all alarms searched out as matrix elements in the first column of the correlation matrix; for each matrix element alarm in the first column, searching, according to in-degree thereof, from left to right in a clockwise direction, for parent alarm nodes of the matrix element alarm; and in the searched out patent nodes, taking a parent alarm node in a highest layer and with a smallest weight as a matrix element in the second column of the matrix element alarm, and a parent alarm node in a second highest layer and with a second smallest weight as a matrix element in the third column of the matrix element alarm, and repeating the process until a parent alarm node in a lowest layer and with a highest weight is searched.

5. An apparatus for determining a correlation matrix of alarms, comprising:
a determination unit (702), configured to determine correlation of the alarms, wherein the correlation at least comprises correspondence between derivate alarms and direct root alarms thereof, and a priority order among the direct root alarms corresponding to a same derivate alarm;
a weighted layered directed graph generation unit (704), configured to generate a weighted layered directed graph of the alarms according to the correlation of the alarms; and
a correlation matrix generation unit(706), configured to generate a correlation matrix of the alarms according to the weighted layered directed graph;
the device is further configured to, for each alarm generated in a network, search the correlation matrix for a row starting with the alarm; and search all alarms starting from second column of the row to find whether there is a matched alarm; if there is a matched alarm, a root alarm corresponding to the alarm is found;
wherein the weighted layered directed graph generation unit (704) is further configured to place a derivate alarm in a layer below the direct root alarms corresponding thereto, and indicate the correspondence between a direct root alarm and the derivate alarm by a unidirectional arrow, wherein if the derivate alarm corresponds to at least two direct root alarms, unidirectional arrows between the at least two direct root alarms and the derivate alarm are arranged clockwise from left to right according to the priority order, and weights corresponding to priorities of the unidirectional arrows are marked on the unidirectional arrows;
the correlation matrix generation unit (706) is further configured to search the weighted layered directed graph from top to down and, for each layer, from left to right; orderly take all alarms searched out as matrix elements in the first column of the correlation matrix; for each matrix element alarm in the first column, search, according to in-degree thereof, from left to right in a clockwise direction, for parent alarm nodes of the matrix element alarm; and in the searched out patent nodes, take a parent alarm node in a highest layer and with a smallest weight as a matrix element in the second column of the matrix element alarm, and a parent alarm node in a second highest layer and with a second smallest weight as a matrix element in the third column of the matrix element alarm, and repeat the process until a parent alarm node in a lowest layer and with a highest weight is searched.

## Patentansprüche

1. Verfahren zum Bestimmen einer Alarmkorrelationsmatrix, umfassend:
Bestimmen einer Korrelation der Alarme, wobei die Korrelation mindestens eine Entsprechung zwischen abgeleiteten Alarmen und direkten Grundalarmen davon umfasst, und einer Prioritätsreihenfolge unter den direkten Grundalarmen, die ein und demselben abgeleiteten Alarm entsprechen;
Erzeugen (S604) eines gewichteten, geschichteten, gerichteten Graphen der Alarme gemäß der Korrelation der Alarme, und Erzeugen (S606) der Korrelationsmatrix der Alarme gemäß dem gewichteten, geschichteten, gerichteten Graphen;
für jeden in einem Netzwerk erzeugten Alarm, Durchsuchen der Korrelationsmatrix nach einer Zeile, die mit dem Alarm beginnt; und Durchsuchen aller Alarme beginnend ab zweiter Spalte der Zeile, um herauszufinden, ob es einen übereinstimmenden Alarm gibt; wenn es einen übereinstimmenden Alarm gibt, ist ein dem Alarm entsprechender Grundalarm gefunden;
wobei der Schritt des Erzeugens eines gewichteten, geschichteten, gerichteten Alarmgraphen gemäß der Korrelation der Alarme umfasst:
Platzieren eines abgeleiteten Alarms in einer Schicht unterhalb der demselben entsprechenden direkten Grundalarme, und Angeben der Entsprechung zwischen einem direkten Grundalarm und dem abgeleiteten Alarm über einen unidirektionalen Pfeil, wobei wenn der abgeleitete Alarm mindestens zwei direkten Grundalarmen entspricht, unidirektionale Pfeile zwischen den mindestens zwei direkten Grundalarmen und dem abgeleiteten Alarm im Uhrzeigersinn von links nach rechts der Prioritätsreihenfolge gemäß angeordnet werden, und Gewichtungen, die Prioritäten der unidirektionalen Pfeile entsprechen, auf den unidirektionalen Pfeilen kenntlich gemacht werden;
der Schritt des Erzeugens der Korrelationsmatrix der Alarme gemäß dem gewichteten, geschichteten, gerichteten Graphen umfasst: Durchsuchen des gewichteten, geschichteten, gerichteten Graphen von oben nach unten und, für jede Schicht, von links nach rechts; ordnungsgemäßes Übernehmen aller als Matrixelemente ausgesuchten Alarme in die erste Spalte der Korrelationsmatrix; für jeden Matrixelementalarm in der ersten Spalte, Suchen, von demselben ausgehend in einer Uhrzeigerrichtung von links nach rechts, nach übergeordneten Alarmknoten des Matrixelementalarms; und in den ausgesuchten übergeordneten Knoten, Übernehmen eines übergeordneten Alarmknotens in einer höchsten Schicht und mit einer kleinsten Gewichtung als ein Matrixelement in die zweite Spalte des Matrixelementalarms, und eines übergeordneten Alarmknotens in einer zweithöchsten Schicht und mit einer zweitkleinsten Gewichtung als ein Matrixelement in die dritte Spalte des Matrixelementalarms, und Wiederholen des Vorgangs, bis ein übergeordneter Alarmknoten in einer untersten Schicht und mit einer höchsten Gewichtung gesucht wurde.

2. Verfahren gemäß Anspruch 1, **dadurch gekennzeichnet, dass** die Korrelation weiter Quellpunkte der Alarme und Gründe für das Erzeugen der Alarme umfasst.

3. Verfahren gemäß Anspruch 1, **dadurch gekennzeichnet, dass** wenn ein Alarm mindestens zwei Schichten in dem gewichteten, geschichteten, gerichteten Graphen besitzt, der Alarm in der untersten Schicht der mindestens zwei Schichten im gewichteten, geschichteten, gerichteten Graphen liegt.

4. Verfahren gemäß Anspruch 1, **dadurch gekennzeichnet, dass** das Verfahren weiter umfasst:
Ausgeben (S610) der Grundalarme und des abgeleiteten Alarms davon in Alarmen, die gemäß übereinstimmenden Fällen zwischen den erzeugten Alarmen und Matrixelementalarmen in den Zeilen der Korrelationsmatrix erzeugt werden;
wobei ein Schritt des Übereinstimmens der erzeugten Alarme und der Matrixelementalarme in den Zeilen der Korrelationsmatrix umfasst:
für jeden Alarm in den erzeugten Alarmen, Durchsuchen einer Korrelationsregelmatrix nach Zeilen, die mit dem Alarm beginnen, und Durchsuchen aller der erzeugten Alarme ab der zweiten Spalte beginnend, um herauszufinden, ob es einen übereinstimmenden Alarm gibt, wobei wenn es einen übereinstimmenden Alarm gibt, ein dem Alarm entsprechender Grundalarm gefunden ist;
wobei die Korrelationsmatrix der Alarme gemäß dem gewichteten, geschichteten, gerichteten Graphen nach dem folgenden Verfahren erzeugt wird:
Durchsuchen des gewichteten, geschichteten, gerichteten Graphen von oben nach unten und, für jede Schicht, von links nach rechts; ordnungsgemäßes Übernehmen aller als Matrixelemente ausgesuchten Alarme in die erste Spalte der Korrelationsmatrix; für jeden Matrixelementalarm in der ersten Spalte, Suchen, von demselben ausgehend in einer Uhrzeigerrichtung von links nach rechts, nach übergeordneten Alarmknoten des Matrixelementalarms; und in den ausgesuchten übergeordneten Knoten, Übernehmen eines übergeordneten Alarmknotens in einer höchsten Schicht und mit einer kleinsten Gewichtung als ein Matrixelement in die zweite Spalte des Matrixelementalarms, und eines übergeordneten Alarmknotens in einer zweithöchsten Schicht und mit einer zweitkleinsten Gewichtung als ein Matrixelement in die dritte Spalte des Matrixelementalarms, und Wiederholen des Vorgangs, bis ein übergeordneter Alarmknoten in einer untersten Schicht und mit einer höchsten Gewichtung gesucht wurde.

5. Einrichtung zum Bestimmen einer Alarmkorrelationsmatrix, umfassend:
eine Bestimmungseinheit (702), die dazu ausgebildet ist, eine Korrelation der Alarme, wobei die Korrelation mindestens eine Entsprechung zwischen abgeleiteten Alarmen und direkten Grundalarmen davon umfasst, und eine Prioritätsreihenfolge unter den direkten Grundalarmen, die ein und demselben abgeleiteten Alarm entsprechen, zu bestimmen;
eine Einheit (704) zum Erzeugen eines gewichteten, geschichteten, gerichteten Graphen, die dazu ausgebildet ist, einen gewichteten, geschichteten, gerichteten Graphen der Alarme gemäß der Korrelation der Alarme zu erzeugen; und
eine Korrelationsmatrix-Erzeugungseinheit (706), die dazu ausgebildet ist, eine Korrelationsmatrix der Alarme gemäß dem gewichteten, geschichteten, gerichteten Graphen zu erzeugen;
wobei die Vorrichtung weiter dazu ausgebildet ist, für jeden in einem Netzwerk erzeugten Alarm die Korrelationsmatrix nach einer Zeile zu durchsuchen, die mit dem Alarm beginnt; und alle Alarme beginnend ab zweiter Spalte der Zeile zu durchsuchen, um herauszufinden, ob es einen übereinstimmenden Alarm gibt; wenn es einen übereinstimmenden Alarm gibt, ist ein dem Alarm entsprechender Grundalarm gefunden;
wobei die Einheit (704) zum Erzeugen eines gewichteten, geschichteten, gerichteten Graphen weiter dazu ausgebildet ist, einen abgeleiteten Alarm in eine Schicht unterhalb der demselben entsprechenden direkten Grundalarme zu platzieren und die Entsprechung zwischen einem direkten Grundalarm und dem abgeleiteten Alarm über einen unidirektionalen Pfeil anzugeben, wobei wenn der abgeleitete Alarm mindestens zwei direkten Grundalarmen entspricht, unidirektionale Pfeile zwischen den mindestens zwei direkten Grundalarmen und dem abgeleiteten Alarm im Uhrzeigersinn von links nach rechts der Prioritätsreihenfolge gemäß angeordnet werden, und Gewichtungen, die Prioritäten der unidirektionalen Pfeile entsprechen, auf den unidirektionalen Pfeilen kenntlich gemacht werden;
die Korrelationsmatrix-Erzeugungseinheit (706) weiter dazu ausgebildet ist, den gewichteten, geschichteten, gerichteten Graphen von oben nach unten und, für jede Schicht, von links nach rechts zu durchsuchen; alle als Matrixelemente ausgesuchten Alarme ordnungsgemäß in die erste Spalte der Korrelationsmatrix zu übernehmen; für jeden Matrixelementalarm in der ersten Spalte von demselben ausgehend in einer Uhrzeigerrichtung von links nach rechts nach übergeordneten Alarmknoten des Matrixelementalarms zu suchen; und in den ausgesuchten übergeordneten Knoten einen übergeordneten Alarmknoten in einer höchsten Schicht und mit einer kleinsten Gewichtung als ein Matrixelement in die zweite Spalte des Matrixelementalarms, und einen übergeordneten Alarmknoten in einer zweithöchsten Schicht und mit einer zweitkleinsten Gewichtung als ein Matrixelement in die dritte Spalte des Matrixelementalarms zu übernehmen, und den Vorgang zu wiederholen, bis ein übergeordneter Alarmknoten in einer untersten Schicht und mit einer höchsten Gewichtung durchsucht wurde.

## Revendications

1. Procédé de détermination d'une matrice de corrélation d'alarmes, comprenant :
la détermination d'une corrélation des alarmes, dans lequel la corrélation comprend au moins une correspondance entre des alarmes dérivées et des alarmes racines directes de celles-ci, et un ordre de priorité parmi les alarmes racines directes correspondant à une même alarme dérivée ;
la génération (S604) d'un graphe orienté et pondéré à couches des alarmes selon la corrélation des alarmes, et la génération (S606) de la matrice de corrélation des alarmes selon le graphe orienté et pondéré à couches ;
pour chaque alarme générée dans un réseau, la recherche dans la matrice de corrélation d'une ligne démarrant avec l'alarme ; et la recherche de toutes les alarmes en partant de la deuxième colonne de la ligne pour trouver s'il y a une alarme appariée ; s'il y a une alarme appariée, une alarme racine correspondant à l'alarme est trouvée ;
dans lequel l'étape de génération d'un graphe orienté et pondéré à couches d'alarmes selon la corrélation des alarmes comprend :
le placement d'une alarme dérivée dans une couche en dessous des alarmes racines directes correspondant à celle-ci, et l'indication de la correspondance entre une alarme racine directe et l'alarme dérivée par une flèche unidirectionnelle, dans lequel si l'alarme dérivée correspond au moins à deux alarmes racines directes, des flèches unidirectionnelles entre les au moins deux alarmes racines directes et l'alarme dérivée sont agencées dans le sens horaire de la gauche vers la droite selon l'ordre de priorité, et des pondérations correspondant aux priorités des flèches unidirectionnelles sont marquées sur les flèches unidirectionnelles ;
l'étape de génération de la matrice de corrélation des alarmes selon le graphe orienté et pondéré à couches comprend : la recherche dans le graphe orienté et pondéré à couches du haut vers le bas et, pour chaque couche, de la gauche vers la droite ; la prise par ordre de toutes les alarmes recherchées en tant qu'éléments de matrice dans la première colonne de la matrice de corrélation ; pour chaque alarme d'élément de matrice dans la première colonne, la recherche, selon le degré entrant de celle-ci, de la gauche vers la droite dans une direction en sens horaire, de noeuds d'alarme parents de l'alarme d'élément de matrice ; et dans les noeuds parents recherchés, la prise d'un noeud d'alarme parent dans une couche la plus haute et avec une pondération la plus petite en tant qu'élément de matrice dans la deuxième colonne de l'alarme d'élément de matrice, et un noeud d'alarme parent dans une seconde couche la plus haute et avec une seconde pondération la plus petite en tant qu'élément de matrice dans la troisième colonne de l'alarme d'élément de matrice, et la répétition du processus jusqu'à ce qu'un noeud d'alarme parent dans une couche la plus basse et avec une pondération la plus haute soit recherché.

2. Procédé selon la revendication 1, **caractérisé en ce que** la corrélation comprend en outre des points source des alarmes et des raisons pour la génération des alarmes.

3. Procédé selon la revendication 1, **caractérisé en ce que**, lorsqu'une alarme a au moins deux couches dans le graphe orienté et pondéré à couches, l'alarme est située dans la couche la plus basse des au moins deux couches dans le graphe orienté et pondéré à couches.

4. Le procédé selon la revendication 1, **caractérisé en ce que** le procédé comprend en outre :
la sortie (S610) des alarmes racines et de l'alarme dérivée de celles-ci dans des alarmes générées selon des cas appariés entre les alarmes générées et des alarmes d'élément de matrice dans les lignes de la matrice de corrélation ;
dans lequel une étape d'appariement des alarmes générées et des alarmes d'élément de matrice dans les lignes de la matrice de corrélation comprend :
pour chaque alarme dans les alarmes générées, la recherche dans une matrice de règles de corrélation des lignes démarrant avec l'alarme, et la recherche de toutes les alarmes générées en partant de la deuxième colonne pour trouver s'il y a une alarme appariée, dans lequel s'il y a une alarme appariée, une alarme racine correspondant à l'alarme est trouvée ;
dans lequel la matrice de corrélation des alarmes est générée selon le graphe orienté et pondéré à couches par le procédé suivant :
la recherche dans le graphe orienté et pondéré à couches du haut vers le bas et, pour chaque couche, de la gauche vers la droite ; la prise par ordre de toutes les alarmes recherchées en tant qu'éléments de matrice dans la première colonne de la matrice de corrélation ; pour chaque alarme d'élément de matrice dans la première colonne, la recherche, selon le degré entrant de celle-ci, de la gauche vers la droite dans une direction en sens horaire, pour des noeuds d'alarme parents de l'alarme d'élément de matrice ; et dans les noeuds parents recherchés, la prise d'un noeud d'alarme parent dans une couche la plus haute et avec une pondération la plus petite en tant qu'élément de matrice dans la deuxième colonne de l'alarme d'élément de matrice, et d'un noeud d'alarme parent dans une seconde couche la plus haute et avec une seconde pondération la plus petite en tant qu'élément de matrice dans la troisième colonne de l'alarme d'élément de matrice, et la répétition du processus jusqu'à ce qu'un noeud d'alarme parent dans une couche la plus basse et avec une pondération la plus haute soit recherché.

5. Dispositif de détermination d'une matrice de corrélation d'alarmes, comprenant :
une unité de détermination (702), configurée pour déterminer une corrélation des alarmes, dans lequel la corrélation comprend au moins une correspondance entre des alarmes dérivées et des alarmes racines directes de celles-ci, et un ordre de priorité parmi les alarmes racines directes correspondant à une même alarme dérivée ;
une unité de génération d'un graphe orienté et pondéré à couches (704), configurée pour générer un graphe orienté et pondéré à couches des alarmes selon la corrélation des alarmes ; et
une unité de génération de matrice de corrélation (706), configurée pour générer une matrice de corrélation des alarmes selon le graphe orienté et pondéré à couches ;
le dispositif est en outre configuré pour, pour chaque alarme générée dans un réseau, rechercher dans la matrice de corrélation une ligne démarrant avec l'alarme ; et rechercher toutes les alarmes en partant d'une deuxième colonne de la ligne pour trouver s'il y a une alarme appariée ; s'il y a une alarme appariée, une alarme racine correspondant à l'alarme est trouvée ;
dans lequel l'unité de génération de graphe orienté et pondéré à couches (704) est en outre configurée pour placer une alarme dérivée dans une couche en dessous des alarmes racines directes correspondant à celle-ci, et pour indiquer la correspondance entre une alarme racine directe et l'alarme dérivée par une flèche unidirectionnelle, dans lequel si l'alarme dérivée correspond à au moins deux alarmes racines directes, des flèches unidirectionnelles entre les au moins deux alarmes racines directes et l'alarme dérivée sont agencées en sens horaire de la gauche vers la droite selon l'ordre de priorité, et des pondérations correspondant aux priorités des flèches unidirectionnelles sont marquées sur les flèches unidirectionnelles ;
l'unité de génération de matrice de corrélation (706) est en outre configurée pour rechercher dans le graphe orienté et pondéré à couches du haut vers le bas et, pour chaque couche, de la gauche vers la droite ; prendre par ordre toutes les alarmes recherchées en tant qu'éléments de matrice dans la première colonne de la matrice de corrélation ; pour chaque alarme d'élément de matrice dans la première colonne, rechercher, selon le degré entrant de celle-ci, de la gauche vers la droite dans une direction en sens horaire, des noeuds d'alarme parents de l'alarme d'élément de matrice ; et dans les noeuds parents recherchés, prendre un noeud d'alarme parent dans une couche la plus haute et avec une pondération la plus petite en tant qu'élément de matrice dans la deuxième colonne de l'alarme d'élément de matrice, et un noeud d'alarme parent dans une deuxième couche la plus haute et avec une seconde pondération la plus petite en tant qu'élément de matrice dans la troisième colonne de l'alarme d'élément de matrice, et répéter le processus jusqu'à ce qu'un noeud d'alarme parent dans une couche la plus basse et avec une pondération la plus haute soit recherché.
